# EUROPÄISCHE PATENTSCHRIFT

(11) **EP 3 757 183 B1**
(45) Veröffentlichungstag und Bekanntmachung des Hinweises auf die Patenterteilung: **18.02.2026**
(21) Anmeldenummer: 20178421.2
(22) Anmeldetag: 05.06.2020
(51) Int. Cl.: C09J 5/00, C09J 4/06, C08F 283/00, C09J 151/08

(54) **UV-HÄRTENDER REAKTIVER KLEBSTOFF**
UV-CURING REACTIVE ADHESIVE
ADHÉSIF RÉACTIF À DURCISSEMENT AU RAYONNEMENT UV

(30) Priorität: 28.06.2019 DE 102019209513
(43) Veröffentlichungstag der Anmeldung: 30.12.2020
(73) Patentinhaber: tesa SE, 22848 Norderstedt (DE)
(72) Erfinder: SCHÜMANN, Dr. Uwe, 25421 Pinneberg (DE); RAFFIN, Marie, 39370 Les Bouchoux (FR); ARNOLD, Moritz, 41836 Hückelhoven (DE); FORNER, Tessa, 94000 Creteil (FR)
(74) Vertreter: tesa SE

(56) Entgegenhaltungen:
- WO-A1-2018/104053
- DE-A1- 10 237 000

## Beschreibung

### Technisches Gebiet der Erfindung

Die vorliegende Erfindung betrifft einen reaktiven, bevorzugt haftklebrigen Klebstoff auf Basis von Acrylmonomeren, vorteilhaft in Filmform, dessen Härtung durch UV-Licht oder sichtbares Licht initiiert wird, der genügend langsam härtet, so dass das Fügen der zu verklebenden Bauteile bei Bedarf, zum Beispiel falls nicht-transparente Substrate verklebt werden sollen, mit einem gewissen zeitlichen Abstand nach der Initiierung erfolgen kann und der nach der Verklebung auch im Dunkeln weiter aushärtet. Der Klebstoff umfasst (a) mindestens ein reaktives Monomer oder Reaktivharz, (b) einen Initiator, insbesondere Radikalinitiator, (c) ein Übergangsmetallkomplex mit Ruthenium als Zentralatom und Bipyridin oder einem einfach oder mehrfach substituierten Bipyridin-Derivat als Liganden, oder Iridium als Zentralatom und Phenylpyridin oder einem einfach oder mehrfach substituierten Phenylpyridin-Derivat als Liganden sowie optional (d) eine polymere Filmbildner-Matrix. Außerdem wird ein Verfahren zur Herstellung des erfindungsgemäßen reaktiven Klebstoffs, wie oben beschrieben zur Verfügung gestellt. Der Klebstoff kann zur Verklebung von diversen Materialien, wie z.B. Kunststoff, Metall, Glas, Keramik und/oder Holz verwendet werden und erzielt hohe, sogenannte strukturelle Verklebungsfestigkeiten.

### Allgemeiner Stand der Technik

Auf Basis von Acrylmonomeren sind vor allem 2-Komponentenklebesysteme seit Jahren bekannt und in der Fachliteratur eingehend beschrieben. In diesen radikalisch polymerisierenden Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise bestehen die eine Komponente aus den zu polymerisierenden Monomeren und einem Aktivator und die andere Komponente aus einer radikalbildenden Substanz (auch Härter oder Initiator genannt) und den zu polymerisierenden Monomeren. Nach Durchmischen oder zumindest Kontaktieren der beiden Komponenten entsteht durch chemische Reaktion des Aktivators mit der radikalbildenden Substanz mindestens ein Radikal und die Polymerisationsreaktion der zu polymerisierenden Monomere beginnt. Die Radikalkettenpolymerisation des Monomers findet anschließend bis zu einem Kettenabbruch statt und die Klebemasse härtet somit aus, wodurch eine dauerhafte Verklebung der zu verklebenden Teile erreicht wird.

In Form von haftklebrigen Filmen (Klebebändern) sind 2-Komponentenklebesysteme auf Basis von Acrylmonomeren ebenfalls bekannt. Sie werden beispielsweise beschrieben in EP 300 847 A1, EP 3 010 989 A1, EP 3 063 243 A1, WO 2018/104053 A1 sowie in EP 3 328 951 A1. Ein wesentlicher Nachteil dieser Filme ist die Tatsache, dass es zwei Filme sind, die formschlüssig in Kontakt gebracht werden müssen, was insbesondere dann zu einem Problem werden kann, wenn die zu verklebenden Flächen sehr lang und schmal sind und somit auch die entsprechenden Klebstofffilme sehr lang und schmal sein müssen.

Die DE 102 37 000 A1 offenbart ein Verfahren zur Herstellung von Polyacrylathaftklebemassen bei welchem der Polyacrylatmasse, die mittels schwefelhaltiger Regler hergestellt wurde, eine Metallverbindung (Metallatom oder Metallion mit Gegenion oder Ligand) zugesetzt wird, um die bei der thermischen Verarbeitung entstehende Geruchsbelästigung durch flüchtige Thiol-Verbindungen zu reduzieren.

Einkomponentige Klebstoffe auf Basis von Acrylmonomeren gehören ebenfalls zum allgemein bekannten Stand der Technik. Diese werden üblicherweise mit Licht, insbesondere UV-Licht gehärtet. Die Härtungsreaktion wird dabei mit Hilfe eines Photoinitiators gestartet, der nach der Absorption von (UV)-Licht in einer Photolysereaktion zerfällt und so reaktive Spezies bildet, die die radikalische Polymerisation auslöst. Nachteilig kann hier die Schnelligkeit der Aushärtereaktion sein, insbesondere, wenn nicht- transparente Substrate verklebt werden sollen. Sobald die Reaktion ausgelöst ist, bleibt in der Regel nicht mehr genügend Zeit zum Fügen der zu verklebenden Bauteile. Somit sind solche Klebstoffe nur für die Verklebung von (UV)-transparenten Substraten geeignet, da die Bestrahlung dann nach dem Fügen der Bauteile durch die Bauteile hindurch erfolgen kann. Nachteilig an diesem Klebstofftyp ist weiterhin, dass die Polymerisation nicht als Dunkelreaktion weiterläuft. Kationisch polymerisierende Klebstoffe haben in dieser Hinsicht Vorteile, jedoch ist auch hier die Polymerisation in der Regel sehr schnell.

In EP 3 390 553 A1 wird ein Verfahren vorgeschlagen, in dem ein Klebeband aus zwei miteinander reagierenden Schichten A und B, die durch eine Barriereschicht voneinander getrennt sind, mit Hilfe eines Lasers zur Reaktion und somit Aushärtung gebracht wird, indem die Barriereschicht durch die Einwirkung des Laserlichts entfernt wird. Nachteilig ist hier, dass ein dreischichtiger Produktaufbau (Schicht A/ Barriereschicht/ Schicht B) notwendig ist.

EP 3 126 402 B1 offenbart ein Verfahren, in dem eine radikalische Polyreaktion durch PlasmaBehandlung eines Klebstoffs, enthaltend eine hinsichtlich einer radikalischen Polyreaktion reaktive Substanz und zusätzlich eine katalytisch aktive Substanz, ausgelöst wird. Mit diesem Verfahren wird eine genügend langsame Aushärtegeschwindigkeit erreicht. Nachteilig ist, dass ein zur Erzielung guter Verklebungsfestigkeiten geeignetes Plasma-Gerät noch nicht breit am Markt verfügbar ist. Zudem sind die erzielbaren Klebfestigkeitsergebnisse von Parametern abhängig, die mancherorts schwierig zu beeinflussen sind, wie zum Beispiel der Luftfeuchtigkeit.

### Aufgabe der vorliegenden Erfindung

Der vorliegenden Erfindung liegt insofern die Aufgabe zu Grunde, einen verbesserten, reaktiven, bevorzugt haftklebrigen Einkomponenten-Klebstoff auf Basis von Acrylmonomeren, vorteilhaft in Form von Filmen bereitzustellen, mit dem hohe (sogenannte strukturelle) Verklebungsfestigkeiten erzielt werden können. Die Härtung soll durch UV-Licht oder sichtbares Licht initiiert werden können. Der Klebstoff soll genügend langsam härten, so dass das Fügen der zu verklebenden Bauteile mit einem gewissen zeitlichen Abstand nach der Initiierung erfolgen kann, damit auch nicht-transparente Bauteile verklebt werden können. Der Klebstoff soll nach der Initiierung und dem Fügen der Bauteile auch im Dunkeln weiter aushärten.

### Lösung der Aufgabe

Gelöst wird diese Aufgabe durch einen reaktiven Klebstoff, umfassend (a) mindestens ein reaktives Monomer oder Reaktivharz, (b) einen Initiator, insbesondere Radikalinitiator, und (c) einen Übergangsmetallkomplex mit Ruthenium oder Iridium als Zentralatom, wobei das reaktive Monomer oder Reaktivharz (a) mindestens einen Vertreter, ausgewählt aus Acrylsäure, Acrylsäureester, Methacrylsäure, Methacrylsäureester, Diacrylate, Dimethacrylate, Triacrylate, Trimethacrylate, höhere funktionelle Acrylate, höhere funktionelle Methacrylate, Vinylverbindungen und/oder oligomere oder polymere Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten umfasst, und wobei der Übergangsmetallkomplex
- Ruthenium als Zentralatom und Bipyridin oder einem einfach oder mehrfach substituierten Bipyridin-Derivat als Liganden
   oder
- Iridium als Zentralatom und Phenylpyridin oder einem einfach oder mehrfach substituierten Phenylpyridin-Derivat als Liganden
umfasst.

Bekannt ist, dass als Liganden des Übergangmetallkomplexes zweizähnige Liganden eingesetzt werden können, insbesondere solche mit zumindest zwei miteinander verbundenen heteroaromatischen Sechsringen - etwa in Form eines Biphenyls -, die ihrerseits Teil eines komplexeren Aufbaus - wie etwa polycyclisch aromatischer Kohlenwasserstoffe und/oder überbrückter - bicyclischer oder polycyclischer - aromatischer Kohlenwasserstoffe - sein können. Werden Biphenyl-Struktureinheiten enthaltende Liganden eingesetzt, kann jeweils einer der aromatischen Ringe des Biphenyls einen "Zahn" des Liganden bilden, so dass die Zweizähnigkeit gegeben ist. Bicylische aromatische Verbindungen - wie Biphenylverbindungen - oder polycylisch aromatische Verbindungen als Liganden können unsubstituiert sein - also an jedem C-Atom ein Wasserstoffatom tragen - oder ein- oder mehrfach substituiert sein.

Der Übergangsmetallkomplex wirkt im Sinne der vorliegenden Erfindung als Photoredox-Katalysator.

Bekannt ist ein Übergangsmetallkomplex, der durch die folgende Formel (I) beschrieben werden kann oder der zumindest eine Struktureinheit umfasst, die durch die Formel (I) beschrieben werden kann: 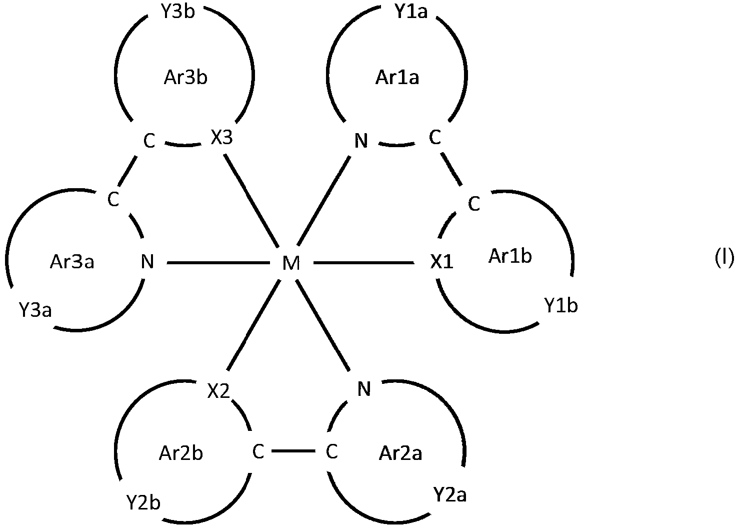 wobei
M wahlweise für Ruthenium oder Iridium steht,
N für Stickstoff steht,
C für Kohlenstoff steht,
X1, X2, X3 - im Weiteren auch kurz als X bezeichnet, wenn es auf die Unterscheidung nicht ankommt oder für diese Bausteine allgemeingültige Aussagen getroffen werden - jeweils wahlweise und unabhängig voneinander für Stickstoff (N) oder Kohlenstoff (C) stehen,
Y1a, Y1b, Y2a, Y2b, Y3a, Y3b - im Weiteren auch kurz als Y bezeichnet, wenn es auf die Unterscheidung nicht ankommt oder für diese Bausteine allgemeingültige Aussagen getroffen werden - jeweils wahlweise und unabhängig voneinander für Stickstoff (N) oder Kohlenstoff mit an diesen gebundenen Wasserstoff (CH) stehen,
und wobei
Ar1a, Ar2a, Ar3a (in einem Kreis) jeweils für einen heteroaromatischen Sechsring (also heterocyclisch aromatischer Sechsring) stehen, wobei das jeweils eine Heteroatom oder gegebenenfalls die jeweils beiden Heteroatome Stickstoff (N) - und die übrigen Atome des Rings dementsprechend Kohlenstoff (C) - sind,
Ar1b, Ar2b, Ar3b (in einem Kreis) jeweils wahlweise und unabhängig voneinander für einen carbocyclischen aromatischen Sechsring oder für einen heterocyclischen aromatischen Sechsring stehen, wobei das gegebenenfalls eine Heteroatom oder die gegebenenfalls beiden Heteroatome jeweils Stickstoff (N) - und die übrigen Atome des Rings dementsprechend Kohlenstoff (C) -sind,
wobei Ar1a mit Ar1b, Ar2a mit Ar2b und Ar3a mit Ar3b jeweils über Kohlenstoff-Kohlenstoff-Bindungen (C-C) miteinander verknüpft sind, so dass sich jeweils ein hetero-biphenylisches Strukturelement ergibt.

Die Position und Lage der Atome (C, N, X (mit den jeweiligen Spezifizierungen), Y (mit den jeweiligen Spezifizierungen)) in den Cyclen Ar1a, Ar2a, Ar3a, Ar1b, Ar2b, Ar3b soll grundsätzlich durch die oben gewählte Darstellung nicht beschränkt sein, insbesondere bedeutet die gewählte Darstellung zunächst nur, dass die jeweils für den Ring angegebenen Atome in diesem auch vorhanden sind. Die Bicylen umfassen jedoch die jeweilige Einheit N-C-C-X (mit X als Platzhalter für X1, X2 beziehungsweise X3), in denen die jeweiligen Atome benachbart sind und N-C und C-X Teile des jeweiligen aromatischen (konjugierten) Rings sind. An die (nicht mit Buchstabensymbolen dargestellten) Kohlenstoffatome (C) in den Cyclen Ar1a, Ar2a, Ar3a, Ar1b, Ar2b, Ar3b kann - jeweils unabhängig voneinander - Wasserstoff gebunden sein, sie können jedoch auch substituiert sein, so dass sowohl die carbocyclischen als auch die heterocyclischen aromatischen Ringe (Ar1a, Ar1b, Ar2a, Ar2b, Ar3a, Ar3b) jeweils wahlweise und unabhängig voneinander nicht substituierte, einfach substituierte oder mehrfach substituierte Derivate der entsprechenden Sechsringe sind.

Mögliche Substituenten umfassen beispielweise Halogenylgruppen, Alkylgruppen, Arylgruppen, Heteroarylgruppen Halogenylalkylgruppen, Halogenylarylgruppen oder Halogenylheteroarylgruppen.

Es ist möglich, dass alle diese Substituenten zu Wasserstoff (H) gewählt.

Einzelne dieser Substituenten können als Halogenatome gewählt, etwa als Fluor. So kann etwa beispielweise jeder der Cyclen Ar1a, Ar2a, Ar3a, Ar1b, Ar2b, Ar3b zwei Fluoratome als Substituenten tragen.

Einzelne der Substituenten können auch Brücken zu dem Nachbarring des jeweiligen Biphenyls darstellen, so dass sich eine Verbindung der allgemeine Formel (II) ergibt: 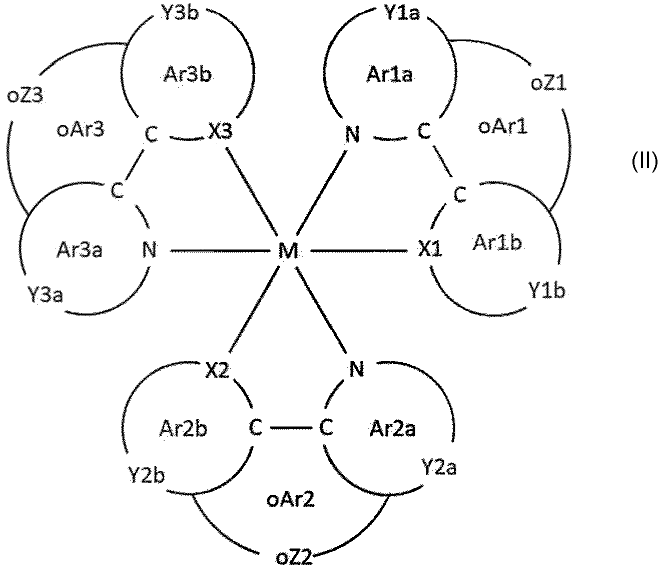
wobei die für Formel (I) beschriebenen Symbolerklärungen gelten und weiterhin
oZ1, oZ2, oZ3 - im Weiteren auch kurz als oZ bezeichnet, wenn es auf die Unterscheidung nicht ankom mt oder für diese Bausteine allgemeingültige Aussagen getroffen werden - jeweils derart optional vorhanden sind, dass zumindest eine dieser Gruppen - etwa oZ1 -, oder alle drei Gruppen existieren, und unabhängig voneinander jeweils zwei - ihrerseits jeweils Wasserstoff oder einen Substituenten tragende - benachbarte Kohlenstoffatome darstellen und jeweils Teil eines konjugierten Rings sind, so dass
oAr1, oAr2, oAr3 (in einem Kreis) jeweils entsprechend für - optionale, entsprechend der Existenz von oZ1, oZ2 und oZ3 - aromatische Sechsringe stehen, die zusammen mit dem jeweiligen hetero-biphenylischen Strukturelement jeweils zu einer tricyclischen heteroaromatischen Struktur kondensiert sind,
wobei die Kohlenstoffatome der Gruppen oZ1, oZ2, oZ3 wahlweise und unabhängig voneinander Wasserstoff (H) oder andere Substituenten - wie beispielweise Kohlenwasserstoffreste, Halogenatome - tragen, so dass die aromatischen Ringe oAr1, oAr2, oAr3, sofern existent, jeweils wahlweise und unabhängig voneinander nicht substituierte, einfach substituierte oder zweifach substituierte Derivate sind. Es können beide Kohlenstoffatome der Gruppen oZ1, oZ2, oZ3 - soweit die jeweilige Gruppe existent ist - jeweils ein Wasserstoffatom tragen.

Für die aromatischen Cyclen und die weiteren Substituenten der Cyclen gelten die für Formel (I) bereits gemachten Aussagen.

In Rahmen der vorliegenden Erfindung ist der Photoredox-Katalysator ein Übergangsmetallkomplex mit Ruthenium als Zentralatom und Bipyridin oder einem einfach oder mehrfach substituierten Bipyridin-Derivat als Liganden; oder ein Übergangsmetallkomplex mit Iridium als Zentralatom und Phenylpyridin oder einem einfach oder mehrfach substituierten Phenylpyridin-Derivat als Liganden.

Gegenstand der Unteransprüche sind dabei weitere vorteilhafte Weiterbildungen des reaktiven Klebstoffs, des Verfahrens zur Herstellung desselben sowie dessen Verwendungsmöglichkeiten.

### Detaillierte Beschreibung der Erfindung

Die oben beschriebene Aufgabe wird über einen reaktiven Klebstoff gelöst, der dadurch gekennzeichnet ist, dass er (a) mindestens ein reaktives Monomer oder Reaktivharz, (b) einen Initiator, insbesondere Radikalinitiator und (c) einen Übergangsmetallkomplex mit Ruthenium oder Iridium als Zentralatom als Photoredox-Katalysator umfasst,
wobei das reaktive Monomer oder Reaktivharz (a) mindestens einen Vertreter, ausgewählt aus Acrylsäure, Acrylsäureester, Methacrylsäure, Methacrylsäureester, Diacrylate, Dimethacrylate, Triacrylate, Trimethacrylate, höhere funktionelle Acrylate, höhere funktionelle Methacrylate, Vinylverbindungen und/oder oligomere oder polymere Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten, besonders bevorzugt Tetrahydrofurfurylacrylat, Tetrahydrofurfurylmethacrylat, 2-Phenoxyethylacrylat, 2-Phenoxyethylmethacrylat, 3,3,5-Trimethylcyclohexylmethacrylat, 4-(1,1-dimethylethyl)cyclohexylmethacrylat, 4-Acryloylmorpholin, 4-Methacryloylmorpholin, 2-Hydroxy-3-phenoxy-propylacrylat, 2-Hydroxy-3-phenoxy-propylmethacrylat, (5-Ethyl-1,3-dioxan-5-yl)methylacrylat, Bisphenol A glycerolate dimethacrylat (BIS-GMA), Bisphenol A dimethacrylate (BIS-DMA) sowie den vernetzenden reaktiven Monomeren Ethylenglykoldiacrylat, Ethylenglykoldimethacrylat, Trimethyloylpropan-propoxylat-triacrylat, Trimethyloyl-propantriacrylat und/ oder Di(trimethylolpropan)-tetraacrylat umfasst, und
wobei der Übergangsmetallkomplex
   - Ruthenium als Zentralatom und Bipyridin oder einem einfach oder mehrfach substituierten Bipyridin-Derivat als Liganden
      oder
   - Iridium als Zentralatom und Phenylpyridin oder einem einfach oder mehrfach substituierten Phenylpyridin-Derivat als Liganden umfasst.

In einer bevorzugten erfindungsgemäßen Ausführungsform wird ein reaktiver Klebstoff bereitgestellt, der (a) mindestens ein reaktives Monomer oder Reaktivharz, (b) einen Initiator, insbesondere Radikalinitiator, (c) einen Übergangsmetallkomplex mit Ruthenium oder Iridium als Zentralatom als Photoredox-Katalysator und (d) eine polymere Filmbildner-Matrix umfasst, wobei das reaktive Monomer oder Reaktivharz (a) mindestens einen Vertreter, ausgewählt aus Acrylsäure, Acrylsäureester, Methacrylsäure, Methacrylsäureester, Diacrylate, Dimethacrylate, Triacrylate, Trimethacrylate, höhere funktionelle Acrylate, höhere funktionelle Methacrylate, Vinylverbindungen und/oder oligomere oder polymere Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten, besonders bevorzugt Tetrahydrofurfurylacrylat, Tetrahydrofurfurylmethacrylat, 2-Phenoxyethylacrylat, 2-Phenoxyethylmethacrylat, 3,3,5-Trimethylcyclohexylmethacrylat, 4-(1,1-dimethylethyl)cyclohexylmethacrylat, 4-Acryloylmorpholin, 4-Methacryloylmorpholin, 2-Hydroxy-3-phenoxy-propylacrylat, 2-Hydroxy-3-phenoxy-propylmethacrylat, (5-Ethyl-1,3-dioxan-5-yl)methylacrylat, Bisphenol A glycerolate dimethacrylat (BIS-GMA), Bisphenol A dimethacrylate (BIS-DMA) sowie den vernetzenden reaktiven Monomeren Ethylenglykoldiacrylat, Ethylenglykoldimethacrylat, Trimethyloylpropan-propoxylat-triacrylat, Trimethyloyl-propantriacrylat und/ oder Di(trimethylolpropan)-tetraacrylat umfasst, und
wobei der Übergangsmetallkomplex
- Ruthenium als Zentralatom und Bipyridin oder einem einfach oder mehrfach substituierten Bipyridin-Derivat als Liganden
   oder
- Iridium als Zentralatom und Phenylpyridin oder einem einfach oder mehrfach substituierten Phenylpyridin-Derivat als Liganden umfasst.

In einer weiteren bevorzugten Ausführungsform wird ein erfindungsgemäßer reaktiver Klebstoff bereitgestellt, der haftklebrig ist.

In einer weiteren bevorzugten Ausführungsform wird ein erfindungsgemäßer reaktiver Klebstoff bereitgestellt, der in Form eines Films vorliegt.

In einer weiteren bevorzugten Ausführungsform wird ein erfindungsgemäßer reaktiver Klebstoff in Filmform, umfassend weitere Filme, Schichten, Klebstoffe, Träger, Trennpapiere und/oder Trennliner bereitgestellt.

In einer weiteren bevorzugten Ausführungsform wird ein Verfahren zur Herstellung eines erfindungsgemäßen reaktiven Klebstoffs offenbart, wobei das Verfahren unter Ausschluss von UV-Licht oder sichtbarem Licht der Wellenlänge, durch die der jeweilige Photoredox-Katalysator - also der Übergangsmetallkomplex - angeregt wird, die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs oder des zu verklebenden Substrats mit der Mischung aufgelöster oder feinverteilter Inhaltsstoffe nach Schritt 2,
4. Verdunsten des Lösemittels und/oder Wassers,
wobei die Inhaltsstoffe (a) mindestens ein reaktives Monomer oder Reaktivharz, (b) einen Initiator, insbesondere Radikalinitiator, (c) einen Übergangsmetallkomplex mit Ruthenium oder Iridium als Zentralatom, der als Photoredox-Katalysator dient, optional (d) eine polymere Filmbildner-Matrix sowie gegebenenfalls weitere Additive und/oder Hilfsstoffe umfassen.

Schritte 1. und 2. können auch in einem Schritt erfolgen, die Inhaltsstoffe also gleichzeitig aufgelöst und/oder feinverteilt und gemischt werden.

In einer weiteren bevorzugten Ausführungsform wird ein Verfahren zur Herstellung eines erfindungsgemäßen reaktiven Klebstofffilms offenbart, wobei das Verfahren unter Ausschluss von UV-Licht oder sichtbarem Licht der Wellenlänge, durch die der jeweilige Photoredox-Katalysator - also der Übergangsmetallkomplex - angeregt wird, die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstofffilms mit der Mischung aufgelöster oder feinverteilter Inhaltsstoffe nach Schritt 2,
4. Verdunsten des Lösemittels und/oder Wassers und
5. Gegebenenfalls Aufwickeln des reaktiven Klebstofffilms zu einer Rolle,
wobei die Inhaltsstoffe (a) mindestens ein reaktives Monomer oder Reaktivharz, (b) einen Initiator, insbesondere Radikalinitiator, (c) einen Übergangsmetallkomplex mit Ruthenium oder Iridium als Zentralatom, der als Photoredox-Katalysator dient, (d) eine polymere Filmbildner-Matrix sowie gegebenenfalls weitere Additive und/oder Hilfsstoffe umfassen.

Schritte 1. und 2. können auch in einem Schritt erfolgen, die Inhaltsstoffe also gleichzeitig aufgelöst und/oder feinverteilt und gemischt werden.

In einer weiteren erfindungsgemäßen Ausführungsform wird ein Verbundkörper offenbart, der durch den reaktiven Klebstoff oder Klebstofffilm nach einem der vorhergehenden Ansprüche verbunden ist.

Nachfolgend werden die Komponenten des erfindungsgemäßen Klebstoffs bzw. des erfindungsgemäßen Klebstofffilms im Detail beschrieben.

### Reaktives Monomer oder Reaktivharz

Wie hierin verwendet, soll das reaktive Monomer oder Reaktivharz für ein Monomer oder Harz stehen, das insbesondere zu einer Radikalkettenpolymerisation in der Lage ist.

Erfindungsgemäß ist das reaktives Monomer ausgewählt aus mindestens einen Vertreter, ausgewählt aus Acrylsäure, Acrylsäureester, Methacrylsäure, Methacrylsäureester, Vinylverbindungen und/oder oligomere oder polymere Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten.

Besonders bevorzugte Monomere sind Tetrahydrofurfurylacrylat (CAS-Nr.: 2399-48-6), Tetrahydrofurfurylmethacrylat (CAS-Nr.: 2455-24-5), 2-Phenoxyethylacrylat (CAS-Nr.: 48145-04-6), 2-Phenoxyethylmethacrylat (CAS-Nr.: 10595-06-9), 3,3,5-Trimethylcyclohexylmethacrylat (CAS-Nr.: 7779-31-9), 4-(1,1-Dimethylethyl)cyclohexylmethacrylat (CAS-Nr.: 46729-07-1), 4-Acryloylmorpholin (CAS-Nr.: 5117-12-4), 4-Methacryloylmorpholin (CAS-Nr.: 5117-13-5), 2-Hydroxy-3-phenoxy-propylacrylat (CAS-Nr.: 16969-10-1), 2-Hydroxy-3-phenoxy-propylmethacrylat (CAS-Nr.: 16926-87-7), (5-Ethyl-1,3-dioxan-5-yl)methylacrylat (CAS-Nr.: 66492-51-1; erhältlich von der Fa. Sartomer-Arkema unter dem Handelsnamen SR531), N-Vinylcaprolactam (CAS-Nr.: 2235-00-9), Bisphenol-A-glycerolat dimethacrylat (BIS-GMA, CAS-Nr.: 1565-94-2), Bisphenol-A-dimethacrylat (BIS-DMA, CAS-Nr.: 3253-39-2), sowie die vernetzenden reaktiven Monomere Ethylenglykol-diacrylat (CAS-Nr.: 2274-11-5), Ethylenglykoldimethacrylat (CAS-Nr.: 97-90-5), Trimethyloylpropanpropoxylattriacrylat (CAS-Nr.: 53879-54-2), Trimethyloylpropan-triacrylat (CAS-Nr.: 15625-89-5) und/oder Di(trimethylolpropan)tetraacrylat (CAS-Nr.: 94108-97-1).

Die Menge des reaktiven Monomers / der reaktiven Monomere beziehungsweise des Reaktivharzes / der Reaktivharze liegt erfindungsgemäß im Bereich von etwa 10 bis 90 Gew.%, bevorzugt etwa 40 bis 70 Gew.%, bezogen auf die Gesamtmischung der Bestandteile des erfindungsgemäßen reaktiven Klebstoffs. Am stärksten bevorzugt werden etwa 45 bis 65 Gew.% des reaktiven Monomers / der reaktiven Monomere / des Reaktivharzes / der Reaktivharze, bezogen auf die Gesamtmischung der Bestandteile des reaktiven Klebstoffs, eingesetzt. Die Gesamtmischung der Bestandteile des erfindungsgemäßen reaktiven Klebstoffs steht hier für die gesamte Menge der eingesetzten (a) reaktiven Monomere/ Reaktivharze, (b) des Initiators, (c) des Photoredox-Katalysators, (d) gegebenenfalls der polymeren Filmbildner-Matrix, sowie gegebenenfalls weiterer optional vorliegender Komponenten, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstoffs gezählt.

### Initiator, insbesondere Radikalinitiator

Wie hierin verwendet, steht der Begriff Initiator, insbesondere Radikalinitiator bzw. radikalbildende Substanz, für eine Verbindung, die eine Polymerisationsreaktion oder vernetzende Polymerisationsreaktion des Klebstoffs einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem erfindungsgemäßen reaktiven Klebstoff ein Initiator, insbesondere Radikalinitiator, zugesetzt.

Bevorzugt werden Radikalinitiatoren. Es können alle im Stand der Technik bekannten Radikalinitiatoren eingesetzt werden. Bevorzugte Radikalinitiatoren sind Peroxide, insbesondere Hydroperoxide.

In einer besonders bevorzugten, erfindungsgemäßen Ausführungsform ist der Radikalinitiator ein organisches Peroxid. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gew.%igen Lösung von Diisopropylhydroperoxid in Diisopropylbenzol, erhältlich unter dem Handelsnamen Peroxan^{®} IHP-50 von der Firma Pergan GmbH, Bocholt, eingesetzt. α,α- Dimethylbenzylhydroperoxid, das auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4) oder 1,1,3,3-Tetramethylbutyl-hydroperoxid (CAS-Nr. 5809-08-5) verwendet werden.

Die Menge des Radikalinitiators liegt erfindungsgemäß im Bereich von etwa 0,1 bis 10 Gew.%, bevorzugt etwa 0,2 bis 8 Gew.%, bezogen auf die Gesamtmischung der Bestandteile des erfindungsgemäßen reaktiven Klebstoffs. Am stärksten bevorzugt werden etwa 0,5 bis 6 Gew.% Radikalinitiator, bezogen auf die Gesamtmischung der Bestandteile des erfindungsgemäßen reaktiven Klebstoffs, eingesetzt. Die Gesamtmischung der Bestandteile des erfindungsgemäßen reaktiven Klebstoffs steht hier für die gesamte Menge der eingesetzten (a) reaktiven Monomere/ Reaktivharze, (b) des Initiators, (c) des Photoredox-Katalysators, (d) gegebenenfalls der polymeren Filmbildner-Matrix, sowie gegebenenfalls weiterer optional vorliegender Komponenten, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstoffs gezählt.

### Photoredox-Katalysator

Wie hier verwendet, steht der Begriff Photoredox-Katalysator für eine (UV)-lichtempfindliche Verbindung, die, wenn sie durch (UV)-Licht angeregt wird, den Transfer von Elektronen zwischen chemischen Verbindungen vermitteln kann, die sonst langsamer oder gar nicht reagieren würden. Im Gegensatz zu einem Photoinitiator zerfällt ein Photoredox-Katalysator bei Bestrahlung mit (UV)-Licht nicht in reaktive Spaltprodukte, sondern wird lediglich in einen angeregten Zustand versetzt, der in der Regel relativ langlebig ist und aus dem heraus Redox-Prozesse initiiert oder vermittelt werden können.

Generell sind geeignete Photoredox-Katalysatoren, wenn ein radikalisch polymerisierbares System aktiviert werden soll, wie vorstehend beschrieben entsprechend der allgemeinen Formeln (I) oder (II).

In der erfindungsgemäßen Ausführungsform ist der Photoredox-Katalysator ein Übergangsmetallkomplex mit Ruthenium als Zentralatom und Bipyridin oder einem einfach oder mehrfach substituierten Bipyridin-Derivat als Liganden oder ein Übergangsmetallkomplex mit Iridium als Zentralatom und Phenylpyridin oder einem einfach oder mehrfach substituierten Phenylpyridin-Derivat als Liganden.

In einer bevorzugten erfindungsgemäßen Ausführungsform ist der Photoredox-Katalysator ausgewählt aus:
i. [Tris(2,2'-bipyridyl)ruthenium(II)]²⁺ , [Ru(bpy)₃]²⁺ - Formel (la): 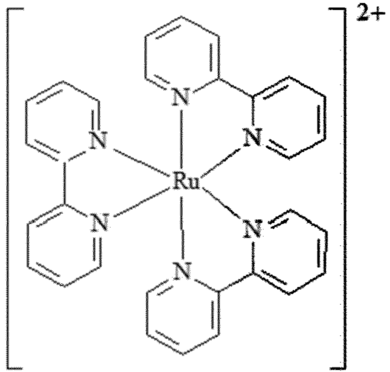
ii. Tris[2-(2,4-difluorophenyl)pyridin]iridium(III), Ir(Fppy)₃ ; CAS-Nr.: 387859-70-3 - Formel (Ib): 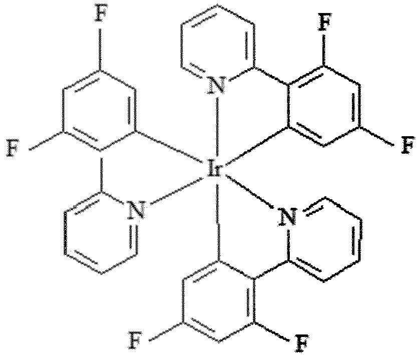
iii. Tris(2-phenylpyridinato)iridium(III), Ir(ppy)₃ ; CAS-Nr.: 94928-86-6 - Formel (Ic):

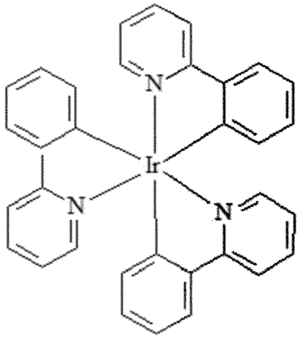

Das bevorzugte Gegenion des Kations der Formel (la) ist Chlorid. Das entsprechende kommerziell verfügbare Produkt enthält Kristallwasser. Die besonders bevorzugte Ausführungsform des Photoredox-Katalysators der Formel (la) ist somit Tris(2,2'-bipyridyl)ruthenium(II) chlorid hexahydrat, (CAS-Nr.: 50525-27-4), erhältlich bei CHEMOS GmbH & Co. KG (http://www.chemos.de), ebenso wie der Photoredox-Katalysatoren der Formel (Ic).

Der Photoredox-Katalysator mit der Formel (Ib) ist erhältlich bei Strem Chemicals, Inc. (http://www.strem.com).

Als Beispiele für erfindungsgemäß vorteilhaft geeignete Photoredox-Katalysatoren der Formeln (I) oder (II) seien weiterhin genannt tris-(2,2'-Bipyrimidin)ruthenium²⁺ (Ru(bpm)₃²⁺); tris-(2,2'-Bipyrazin)ruthenium²⁺ (Ru(bpz)₃²⁺); tris-(1,10-Phenanthrolin)ruthenium²⁺ (Ru(phen)₃²⁺); bis-(2-(2',4'-Difluorophenyl)-5-trifluoromethylpyridin)(ditert-butylbipyridin) iridium⁺ (Ir(dF(CF₃)ppy)₂(dtbbpy)⁺); bis-(2-phenylpyridin)(ditert-butylbipyridin)iridium⁺ (Ir(ppy)₂(dtbbpy)⁺).

Die Menge des Photoredox-Katalysators liegt erfindungsgemäß im Bereich bis etwa 5 Gew.%, bevorzugt 0,05 bis 2,0 Gew.%, bezogen auf die Gesamtmischung der Bestandteile des erfindungsgemäßen reaktiven Klebstoffs. Am stärksten bevorzugt werden etwa 0,1-1,0 Gew.% Photoredox-Katalysator, bezogen auf die Gesamtmischung der Bestandteile des erfindungsgemäßen reaktiven Klebstoffs. Die Gesamtmischung der Bestandteile des erfindungsgemäßen reaktiven Klebstoffs steht hier für die gesamte Menge der eingesetzten (a) reaktiven Monomere/ Reaktivharze, (b) des Initiators, (c) des Photoredox-Katalysators, (d) gegebenenfalls der polymeren Filmbildner-Matrix, sowie gegebenenfalls weiterer optional vorliegender Komponenten, die als Summe in Gewichtsprozent (Gew.%) erhalten wird.

Lösemittel beziehungsweise Wasser dienen nur der Herstellung und werden in dieser Betrachtung nicht zur Gesamtmischung der Bestandteile des erfindungsgemäßen reaktiven Klebstoffs gezählt.

### Polymere Filmbildner-Matrix

In einer bevorzugten erfindungsgemäßen Ausführungsform umfasst der erfindungsgemäße reaktive Klebstoff eine polymere Filmbildner-Matrix. Aufgabe dieser polymeren Filmbildner-Matrix ist es, ein inertes Grundgerüst für die reaktiven Monomere/ Reaktivharze und die übrigen Stoffe zu bilden, so dass diese nicht flüssig vorliegen. Die polymere Filmbildner-Matrix ist ein Polymer, das somit dem Zweck dient, die reaktiven Monomere/ Reaktivharze und die übrigen Stoffe physikalisch zu binden beziehungsweise einzubetten. Die polymere Filmbildner-Matrix verleiht dem erfindungsgemäßen reaktiven Klebstoff somit eine Form und verhindert oder verzögert das Fließen. Die polymere Filmbildner-Matrix soll unter anderem ermöglichen, den erfindungsgemäßen reaktiven Klebstoff vorteilhaft als Film oder Folie darzureichen. Auf diese Art und Weise wird eine einfachere Handhabung gewährleistet.

Inert bedeutet in diesem Zusammenhang, dass die reaktiven Monomere/ Reaktivharze unter geeignet gewählten Bedingungen (z. B. bei ausreichend geringen Temperaturen) im Wesentlichen nicht mit der polymeren Filmbildner-Matrix reagieren.

Geeignete polymere Filmbildner-Matrices zur Verwendung in der vorliegenden Erfindung sind thermoplastische Polymere, wie z.B. Polyurethane, Polyester bzw. Copolyester, Polyamide bzw. Copolyamide, Polyacrylsäureester, Acrylsäureester-Copolymere, Polymethacrylsäureester, Methacrylsäureester-Copolymer. Chemisch oder physikalisch vernetzte Stoffe der zuvor genannten Verbindungen sind ebenfalls denkbar. Darüber hinaus können auch Blends aus verschiedenen thermoplastischen Polymeren eingesetzt werden. Weiterhin sind auch Elastomere, thermoplastische Elastomere und Duromere allein oder im Gemisch als polymere Filmbildner-Matrix denkbar.

Bevorzugt sind thermoplastische Polymere, insbesondere semikristalline. Besonders bevorzugt sind thermoplastische Polymere mit einer kristallinen Schmelztemperatur von kleiner als 100 °C und Erweichungstemperaturen von ebenfalls kleiner als 100 °C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100 °C, insbesondere kleiner als 80 °C.

In einer besonders bevorzugten, erfindungsgemäßen Ausführungsform wird Desmomelt^{®} 530 als polymere Filmbildner-Matrix eingesetzt, das im Handel bei der Covestro AG, Leverkusen, erhältlich ist. Desmomelt^{®} 530 ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 10 bis 90 Gew.%, bevorzugt etwa 20 bis 70 Gew.%, bezogen auf die Gesamtmischung der Bestandteile des erfindungsgemäßen reaktiven Klebstoffs. Stärker bevorzugt werden 25 bis 60 Gew.%, am stärksten bevorzugt etwa 30 bis 50 Gew.%, der polymeren Filmbildner-Matrix, bezogen auf die Gesamtmischung der Bestandteile eines der erfindungsgemäßen reaktiven Klebstoffs, eingesetzt. Die Gesamtmischung der Bestandteile des erfindungsgemäßen reaktiven Klebstoffs steht hier für die gesamte Menge der eingesetzten (a) reaktiven Monomere/ Reaktivharze, (b) des Initiators, (c) des Photoredox-Katalysators, (d) der polymeren Filmbildner-Matrix, sowie gegebenenfalls weiterer optional vorliegender Komponenten, die als Summe in Gewichtsprozent (Gew.%) erhalten wird. Lösemittel beziehungsweise Wasser dienen nur der Herstellung und werden in dieser Betrachtung nicht zur Gesamtmischung der Bestandteile des erfindungsgemäßen reaktiven Klebstoffs gezählt.

### Weitere Bestandteile des reaktiven Klebstoffs

Der reaktive Klebstoff der vorliegenden Erfindung kann gegebenenfalls weitere Additive und/oder Hilfsstoffe enthalten, die im Stand der Technik bekannt sind. Hier sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane und Tackifier-Harze), Compoundierungsmittel, Weichmacher und/oder Alterungs-, Licht- und UV-Schutzmittel, zum Beispiel in Form von primären und sekundären Antioxidantien zu nennen. Die weiteren Bestandteile der erfindungsgemäßen reaktiven Klebstofffilme können gleichzeitig auch reaktive Monomere sein. Dies kann insbesondere bevorzugt bei den Silan-Haftvermittlern der Fall sein. Bevorzugt wird in diesem Zusammenhang 3-Trimethoxysilylpropylmethacrylat (CAS-Nr.: 2530-85-0), erhältlich unter dem Handelsnamen Dynasylan^{®} MEMO von der Firma Evonik AG, Essen, eingesetzt.

### Reaktiver Klebstofffilm

In einer bevorzugten erfindungsgemäßen Ausführungsform liegt der erfindungsgemäße reaktive Klebstoff in Form eines Films vor. Wie hierin verwendet, soll der Begriff "Klebstofffilm" (oder auch Klebstoffschicht, Klebstofffolie) eine vollständig oder nicht-vollständig bereitgestellte Auftragung der Klebstoffmischung, wie nachfolgend beschrieben, umfassen. So kann beispielsweise eine punktförmige Auftragung des Klebstoffs, die die zu verklebende Substratoberfläche(n) nicht vollständig bedeckt, ebenfalls zu einer dauerhaften Verklebung im Sinne der vorliegenden Erfindung führen.

In einer bevorzugten, erfindungsgemäßen Ausführungsform umfasst der erfindungsgemäße reaktive Klebstofffilm eine Mischung der folgenden Bestandteile: 4-Acryloylmorpholin, N-Vinylcaprolactam, Di(trimethylolpropan)tetraacrylat, Diisopropylbenzol-hydroperoxid, Tris(2,2'-bipyridyl)ruthenium(II) chlorid hexahydrat, thermoplastisches Polyurethan, insbesondere Desmomelt^{®} 530 und 3-Trimethoxysilylpropylmethacrylat.

Eine besonders bevorzugte, erfindungsgemäße Ausführungsform enthält etwa 45,0-65,0 Gew.% der reaktiven Monomere, etwa 0,5 bis 6,0 Gew.% Diisopropylbenzol-hydroperoxid, etwa 0,1-1,0 Gew.% Photoredox-Katalysator, etwa 30,0 bis 50,0 Gew. % thermoplastisches Polyurethan, und etwa 0,5 bis 2,0 Gew.% Silan, bezogen auf die Gesamtmischung der Bestandteile des erfindungsgemäßen reaktiven Klebstofffilms.

Wie hierin verwendet, bezieht sich die Gesamtmischung der Bestandteile des erfindungsgemäßen reaktiven Klebstofffilms auf die gesamte Menge der eingesetzten (a) reaktiven Monomere/ Reaktivharze, (b) des Initiators, (c) des Photoredox-Katalysators, (d) der polymeren Filmbildner-Matrix, sowie der weiteren vorliegenden Bestandteile, die als Summe in Gewichtsprozent (Gew.%) erhalten wird.

Der erfindungsgemäße reaktive Klebstofffilm besitzt in der Regel eine Schichtdicke im Bereich von etwa 20 bis 200 µm, bevorzugt etwa 30 bis 100 µm, bevorzugter etwa 40 bis 60 µm und besonders bevorzugt etwa 50 µm. Zur Herstellung größerer Schichtdicken kann es von Vorteil sein, mehrere Klebstofffilmschichten zusammen zu laminieren.

Zudem ist der erfindungsgemäße, reaktive Klebstofffilm dadurch gekennzeichnet, dass er bevorzugt haftklebrige Eigenschaften besitzt. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

Weiterhin kann der reaktive Klebstofffilm der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft. Ebenso können eine Corona-, Plasma- oder Flammvorbehandlung vorteilhaft sein.

### Substrate

Substrate, die für eine Verklebung mit dem erfindungsgemäßen, reaktiven Klebstoff/ Klebstofffilm geeignet sind, sind Metalle, Glas, Holz, Beton, Stein, Keramik, Textil und/oder Kunststoffe. Die zu verklebenden Substrate können gleich oder verschieden sein. Sie können transparent oder auch nicht-transparent sein.

In einer bevorzugten Ausführungsform wird der erfindungsgemäße, reaktive Klebstoff/ Klebstofffilm zur Verklebung von Metallen, Glas und Kunststoffen eingesetzt. In einer besonders bevorzugten, erfindungsgemäßen Ausführungsform werden Polycarbonate, Polyamid und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstoff verklebt werden. Die zu verklebenden Substrate können auch die verschiedensten Funktionen einnehmen, wie zum Beispiel Gehäuse, Sichtfenster, Versteifungselemente, etc.

### Verfahren zur Herstellung eines reaktiven Klebstoffs und Klebstofffilms

Die Herstellung erfolgt spätestens ab der Zugabe des Photoredox-Katalysators unter Ausschluss von UV-Licht oder sichtbarem Licht der Wellenlänge, durch die der jeweilige Photoredox-Katalysator angeregt wird. In der Regel sind dies Wellenlängen von kleiner 500 nm. Der Ausschluss kann in der Regel mit Gelblichtfolien erreicht werden.

Die erfindungsgemäßen, reaktiven Klebstoffe und Klebstofffilme werden durch die nachfolgend beschriebenen Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff mindestens ein reaktives Monomer/ Reaktivharz, den Initiator, den Photoredox-Katalysator, gegebenenfalls die polymere Filmbildner-Matrix, sowie gegebenenfalls die weiteren vorliegenden Bestandteile, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennliner, ein Trennpapier, ein Trägermaterial oder ein Haftklebstoff oder Haftklebstofffilm mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittelfrei durch Extrusion, Hotmeltdüsenbeschichtung oder Kalandrieren hergestellt.

### Verbundkörper

Zuletzt wird erfindungsgemäß ein Verbundkörper bereitgestellt, der durch den erfindungsgemäßen, reaktiven Klebstoff/ Klebstofffilm, wie oben definiert, verbunden ist.

### Produkteigenschaften

Der erfindungsgemäße reaktive Klebstoff/ Klebstofffilm zeigt hervorragende Produkteigenschaften, die auch für den Fachmann derartig nicht vorherzusehen waren. Der Klebstoff/ Klebstofffilm kann mit einer handelsüblichen Quecksilberdampf-UV-Lampe (zum Beispiel UVA CUBE 100 von der Firma Hönle, http://www.hoenle.de) ausgehärtet werden. Die Bestrahlungszeit bei Verwendung des UVA CUBE 100 beträgt ungefähr 1 bis 3 Minuten, abhängig von der Distanz des Klebstoffs/ Klebstofffilms zur Lampe. Nach erfolgter Bestrahlung härtet der Klebstoff/ Klebstofffilm nicht sofort aus. Er bleibt zunächst flüssig beziehungsweise haftklebrig. Das Verkleben bzw. Fügen der Substrate ist innerhalb einer Zeitspanne von drei Minuten oder etwas länger nach der Bestrahlung möglich. Mit anderen Worten: der erfindungsgemäße Klebstoff / Klebstofffilm hat nach dem Bestrahlen und somit der Initiierung der Härtung eine Offenzeit von mindestens drei Minuten. Der erfindungsgemäße Klebstoff/ Klebstofffilm härtet nach der Bestrahlung innerhalb einer Zeitspanne von ungefähr 24 Stunden vollständig aus. Die Aushärtung erfolgt auch im Dunkeln. Mit dem erfindungsgemäßen Klebstoff/ Klebstofffilm können somit auch nicht-transparente Substrate verklebt werden.

Mit dem erfindungsgemäßen Klebstoff/ Klebstofffilm werden hohe Verklebungsfestigkeiten erzielt. In Zugscherfestigkeitsprüfungen werden bei Verklebungen von Polycarbonat-Prüfkörpern in der Regel Werte von größer als 10 MPa erreicht (siehe Beispiele). Diese Größenordnung wird im allgemeinen Sprachgebrauch als "strukturell" bezeichnet. Im Push-Out Test werden bei Verklebungen von Polycarbonat-Prüfkörpern Werte von größer als 4 MPa erreicht (siehe Beispiele).

### Experimenteller Teil

Die nachfolgenden Beispiele dienen zur Verdeutlichung der vorliegenden Erfindung, sollen aber keinesfalls als Einschränkung des Schutzbereichs verstanden werden.

### Herstellung einer Lösung der Filmbildner-Matrix

### Polyurethan (PU) - Lösung:

Eine 20%ige acetonische Lösung des filmbildenden Polymers wird hergestellt, indem zunächst 120 g Desmomelt^{®} 530 und 480 g Aceton in ein Schraubglas eingewogen werden und das Schraubglas verschlossen wird. Durch mehrtägiges Rollen des Schraubglases auf einer Rollbank wird das Desmomelt^{®} 530 vollständig in Lösung gebracht. Je nach Rollgeschwindigkeit dauert der Vorgang etwa ein bis sieben Tage. Alternativ kann die acetonische Lösung auch durch Rühren des Desmomelt^{®} 530-Granulats in Aceton mit einem handelsüblichen Laborrührer hergestellt werden.

### Beispiel 1

### Herstellen eines haftklebrigen, reaktiven Klebstofffilms

174,0 g der 20%igen acetonischen Lösung von Desmomelt^{®} 530 (PU-Lösung) werden mit 42,9 g 4-Acryloylmorpholin, 11,6 g N-Vinylcaprolactam, 3,5 g Di(trimethyolpropan)tetraacrylat, 1,2 g 3-Trimethoxysilylpropylmethacrylat, und 11,6 g Peroxan^{®} IHP-50 mit einem handelsüblichen Laborrührer 60 Minuten gemischt. Peroxan^{®} IHP-50 ist eine 50 gew.%ige Lösung von Diisopropylhydroperoxid in Diisopropylbenzol von der Firma Pergan. 11,6 g Peroxan^{®} IHP-50 entspricht somit 5,8 g Diisopropylhydroperoxid und 5,8 g Diisopropylbenzol. Alle weiteren Operationen erfolgen unter Gelblicht. Es werden 0,2 g Tris(2,2'-bipyridyl)ruthenium(II) chlorid hexahydrat hinzugegeben und 30 Minuten eingemischt.

Die erhaltene homogene Mischung wird mit Hilfe eines handelsüblichen Laborstreichtisches (zum Beispiel von der Firma SMO, Sondermaschinen Oschersleben GmbH) mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 µm dicker Film erhalten wird. Der erhaltene haftklebrige, reaktive Klebstofffilm wird mit einer zweiten silikonisierten Polyesterfolie (Trennliner) abgedeckt und in einen Aluminium-Kunststoff Verbundbeutel (zum Beispiel "Moisture Barrier Bags" von der Firma Helmut Boss Verpackungsmaschinen KG) luft-, feuchtigkeits- und lichtdicht eingeschweißt. Dort wird der haftklebrige, reaktive Klebstofffilm bis zur Verwendung/ Prüfung aufbewahrt.

Die prozentuale Zusammensetzung des haftklebrigen, reaktiven Klebstofffilms sowie die Einwaagen zur Herstellung der vorausgegangenen Lösung sind in der folgenden Tabelle aufgeführt:

### Beispiel 1, Lösung und haftklebriger, reaktiver Klebstofffilm

| | Gew.% Feststoff* | Einwaage (g) mit Lösemittel |
|---|---|---|
| Desmomelt^{®} 530** | 34,8 | |
| Desmomelt^{®} 530-Lösung in Aceton (20 Gew.% Desmomelt^{®} 530 in Aceton) | | 174,0 |
| 4-Acryloylmorpholin | 42,9 | 42,9 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Tris(2,2'-bipyridyl)ruthenium(ll) chlorid hexahydrate (CAS-Nr.: 50525-27-4) | 0,2 | 0,2 |
| Summe | 100,0 | 245,0 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** 3-Trimethoxysilylpropylmethacrylat, Fa. Evonik **** 50 gew.%ige Lösung von Diisopropylhydroperoxid in Diisopropylbenzol, Fa. Pergan | | |

In analoger Weise wie in Beispiel 1 werden die Lösungen und haftklebrigen, reaktiven Klebstofffilme der weiteren Beispiele hergestellt.

Die folgenden Tabellen geben Auskunft über die Zusammensetzungen der Lösungen und haftklebrigen, reaktiven Klebstofffilme in den weiteren Beispielen.

### Beispiel 2, Lösung und haftklebriger, reaktiver Klebstofffilm

| | Gew.% Feststoff* | Einwaage (g) mit Lösemittel |
|---|---|---|
| Desmomelt^{®} 530** | 36,5 | |
| Desmomelt^{®} 530-Lösung in Aceton (20 Gew.% Desmomelt^{®} 530 in Aceton) | | 182,5 |
| 4-Acryloylmorpholin | 45,0 | 45,0 |
| N-Vinylcaprolactam | 12,2 | 12,2 |
| Di(trimethyolpropan)tetraacrylat | 3,7 | 3,7 |
| Dynasylan^{®} Memo*** | 1,2 | 1,2 |
| Diisopropylhydroperoxid | 1,2 | |
| Peroxan^{®} IHP-50**** | | 2,4 |
| Tris(2,2'-bipyridyl)ruthenium(ll) chlorid hexahydrate (CAS-Nr.: 50525-27-4) | 0,2 | 0,2 |
| Summe | 100,0 | 247,2 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 3, Lösung und haftklebriger, reaktiver Klebstofffilm

| | Gew.% Feststoff* | Einwaage (g) mit Lösemittel |
|---|---|---|
| Desmomelt^{®} 530** | 41,6 | |
| Desmomelt^{®} 530-Lösung in Aceton (20 Gew.% Desmomelt^{®} 530 in Aceton) | | 207,8 |
| 4-Acryloylmorpholin | 9,7 | 9,7 |
| SR 531*** | 41,5 | 41,5 |
| Diisopropylhydroperoxid | 6,9 | |
| Peroxan^{®} IHP-50**** | | 13,8 |
| Tris(2,2'-bipyridyl)ruthenium(ll) chlorid hexahydrate (CAS-Nr.: 50525-27-4) | 0,3 | 0,3 |
| Summe | 100,0 | 273,1 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** (5-Ethyl-1,3-dioxan-5-yl)methylacrylat, Fa. Sartomer-Arkema **** 50 gew.%ige Lösung von Diisopropylhydroperoxid in Diisopropylbenzol, Fa. Pergan | | |

### Beispiel 4, Lösung und haftklebriger, reaktiver Klebstofffilm

| | Gew.% Feststoff* | Einwaage (g) mit Lösemittel |
|---|---|---|
| Desmomelt^{®} 530** | 42,8 | |
| Desmomelt^{®} 530-Lösung in Aceton (20 Gew.% Desmomelt^{®} 530 in Aceton) | | 214,0 |
| 4-Acryloylmorpholin | 10,0 | 10,0 |
| SR 531*** | 42,9 | 42,9 |
| Trimethyloylpropanpropoxylattriacrylat | 1,4 | 1,4 |
| Dynasylan^{®} Memo**** | 1,4 | 1,4 |
| Diisopropylhydroperoxid | 1,4 | |
| Peroxan^{®} IHP-50***** | | 2,8 |
| Tris(2,2'-bipyridyl)ruthenium(ll) chlorid hexahydrate (CAS-Nr.: 50525-27-4) | 0,1 | 0,1 |
| Summe | 100,0 | 272,6 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** (5-Ethyl-1,3-dioxan-5-yl)methylacrylat, Fa. Sartomer-Arkema ****3-Trimethoxysilylpropylmethacrylat, Fa. Evonik ***** 50 gew.%ige Lösung von Diisopropylhydroperoxid in Diisopropylbenzol, Fa. Pergan | | |

### Beispiel 5, Lösung und haftklebriger, reaktiver Klebstofffilm

| | Gew.% Feststoff* | Einwaage (g) mit Lösemittel |
|---|---|---|
| Desmomelt^{®} 530** | 42,1 | |
| Desmomelt^{®} 530-Lösung in Aceton (20 Gew.% Desmomelt^{®} 530 in Aceton) | | 210,7 |
| 4-Acryloylmorpholin | 9,8 | 9,8 |
| SR 531*** | 42,2 | 42,2 |
| BIS-DMA | 1,4 | 1,4 |
| Dynasylan^{®} Memo**** | 1,4 | 1,4 |
| Diisopropylhydroperoxid | 2,8 | |
| Peroxan^{®} IHP-50***** | | 5,6 |
| Tris(2,2'-bipyridyl)ruthenium(ll) chlorid hexahydrate (CAS-Nr.: 50525-27-4) | 0,3 | 0,3 |
| Summe | 100,0 | 271,4 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** (5-Ethyl-1,3-dioxan-5-yl)methylacrylat, Fa. Sartomer-Arkema ****3-Trimethoxysilylpropylmethacrylat, Fa. Evonik ***** 50 gew.%ige Lösung von Diisopropylhydroperoxid in Diisopropylbenzol, Fa. Pergan | | |

### Beispiel 6, Lösung und haftklebriger, reaktiver Klebstofffilm

| | Gew.% Feststoff* | Einwaage (g) mit Lösemittel |
|---|---|---|
| Desmomelt^{®} 530** | 34,8 | |
| Desmomelt^{®} 530-Lösung in Aceton (20 Gew.% Desmomelt^{®} 530 in Aceton) | | 174,0 |
| 4-Acryloylmorpholin | 42,9 | 42,9 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Ir(ppy)₃ (CAS-Nr.: 94928-86-6) | 0,2 | 0,2 |
| Summe | 100,0 | 245,0 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** 3-Trimethoxysilylpropylmethacrylat, Fa. Evonik **** 50 gew.%ige Lösung von Diisopropylhydroperoxid in Diisopropylbenzol, Fa. Pergan | | |

### Beispiel 7, Lösung und haftklebriger, reaktiver Klebstofffilm

| | Gew.% Feststoff* | Einwaage (g) mit Lösemittel |
|---|---|---|
| Desmomelt^{®} 530** | 34,8 | |
| Desmomelt^{®} 530-Lösung in Aceton (20 Gew.% Desmomelt^{®} 530 in Aceton) | | 174,0 |
| 4-Acryloylmorpholin | 42,9 | 42,9 |
| N-Vinylcaprolactam | 11,6 | 11,6 |
| Di(trimethyolpropan)tetraacrylat | 3,5 | 3,5 |
| Dynasylan^{®} Memo*** | 1,2 | 1,2 |
| Diisopropylhydroperoxid | 5,8 | |
| Peroxan^{®} IHP-50**** | | 11,6 |
| Ir(Fppy)₃ (CAS-Nr.: 387859-70-3) | 0,2 | 0,2 |
| Summe | 100,0 | 245,0 |

| | | |
|---|---|---|
| * Unter Feststoff werden hier alle Stoffe verstanden, die nicht Lösemittel sind. Lösemittel sind hier Aceton und Diisopropybenzol. ** Hydroxyl-terminiertes, weitgehend lineares, thermoplastisches, stark kristallisierendes Polyurethan-Elastomer, Fa. Covestro. *** 3-Trimethoxysilylpropylmethacrylat, Fa. Evonik **** 50 gew.%ige Lösung von Diisopropylhydroperoxid in Diisopropylbenzol, Fa. Pergan | | |

### Zugscherfestigkeit

### Probenvorbereitung für die Bestimmung der Zugscherfestigkeit

Aus den zu untersuchenden haftklebrigen, reaktiven Klebstofffilmen, die beidseitig jeweils mit einem Trennliner abgedeckt sind, werden rechteckige Stanzlinge mit den Maßen 25,0 mm x 12,5 mm ausgestanzt. Die Trennpapiere werden daraufhin jeweils von einer Seite des Stanzlings abgezogen.

Die Stanzlinge der reaktiven Klebstofffilme werden passgenau jeweils auf das Ende eines schwarz eingefärbten, nicht-transparenten Polycarbonat-Prüfkörpers (erhältlich zum Beispiel von der Firma Rocholl, Aglasterhausen) mit den Maßen 100,0 mm x 25,0 mm x 5,0 mm aufgelegt. Die Stanzlinge haften nun jeweils auf diesem Prüfkörper. Anschließend wird der noch auf den Stanzlingen verbliebene Trennliner abgezogen.

### Bestrahlung für die Bestimmung der Zugscherfestigkeit

Die Bestrahlungen erfolgten mit dem UVA CUBE 100 von der Firma Hönle, der mit einer Quecksilberdampflampe ausgerüstet war. Die Distanz der reaktiven Klebstofffilme zur Quecksilberdampflampe wurde mit Hilfe eines Laborboys so eingestellt, dass sie wenige Millimeter betrug. Die Bestrahlungszeit betrug jeweils eine Minute. Danach erfolgte das Fügen der Prüfkörper. Die Zeitspanne zwischen dem Ende des Bestrahlens und dem Fügen der Prüfkörper wurde variiert. Sie betrug zwischen einer und fünf Minuten.

### Verklebung für die Bestimmung der Zugscherfestigkeit

Die zweiten Polycarbonat-Prüfkörper wurden jeweils mit einem Ende bündig auf die vorbereiteten, wie oben beschriebenen Proben, bestehend jeweils aus dem erstem Polycarbonat-Prüfkörper und dem darauf haftenden, bestrahlten Stanzling gelegt, so dass wie in DIN EN 1465 beschrieben, jeweils ein überlappender Verbund aus erstem Polycarbonat-Prüfkörper/ bestrahltem Stanzling/ zweitem Polycarbonat-Prüfkörper resultierte. Die Überlappungslänge betrug jeweils 12,5 mm. Die Überlappungsfläche betrug jeweils 312,5 mm². Die überlappenden Verbunde aus erstem Prüfkörper / bestrahltem und somit reagierendem Klebstoff / zweitem Prüfkörper wurden auf einen Tisch gelegt. Auf den zweiten Prüfkörper wurde jeweils ein Gewicht von 2 kg gestellt. Der Verbund wurde dem permanenten Druck des Gewichtes jeweils 60 Sekunden bei Raumtemperatur ausgesetzt (Verpresszeit). Sodann wurde das Gewicht entfernt. Der Verbund wurde anschließend jeweils 24 Stunden bei 23°C und 50% relativer Luftfeuchtigkeit gelagert. Dabei kam es zu einer allmählich voranschreitenden Härtungsreaktion des Klebstoffs und zu einer sich allmählich verstärkenden Haftung zwischen dem jeweiligen Klebstoff und den jeweiligen Polycarbonat-Prüfkörpern. Es kam somit zu einer Verklebung mit einer allmählichen Festigkeitszunahme über die Zeit, die über die ursprüngliche Festigkeit durch Haftklebewirkung deutlich hinausging. Sodann erfolgte die Bestimmung der Zugscherfestigkeit (Frischwerte).

Zur Prüfung der Lagerstabilität wurden die in einen Aluminium-Kunststoff Verbundbeutel luft-, feuchtigkeits- und lichtdicht eingeschweißten, haftklebrigen, reaktiven Klebstofffilme 6 Monate bei 23°C aufbewahrt. Sodann erfolgte die Bestimmung der Zugscherfestigkeit nochmals, inklusive Probenvorbereitung, Bestrahlung und Verklebung, wie beschrieben. Die Zeitspanne zwischen dem Ende des Bestrahlens und dem Fügen der Prüfkörper betrug dabei stets eine Minute.

In analoger Weise wurden auch Polyamid/ Polyamid- sowie Aluminium/Aluminium-Verklebungen hergestellt. Die entsprechenden, nicht-transparenten Polyamid Prüfköper hatten die gleichen Maße wie die Polycarbonat-Prüfkörper, die Aluminium-Prüfkörper (Legierung 5005A (AIMG1), eloxiert E6 EV1) waren nur 2 mm dick und hatten ansonsten die gleichen Maße. Alle verwendeten Prüfkörper sind erhältlich bei der Firma Rocholl.

Die Polyamid-Prüfkörper wurden mit dem Piezobrush^{®} PZ2 Handgerät (Fa. relyon plasma GmbH) unmittelbar vor der Verklebung kurz vorbehandelt.

### Bestimmung der Zugscherfestigkeit

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23°C und 50 % relativer Luftfeuchte durchgeführt.

### Push Out-Test

Der Push-out-Test ermöglicht Aussagen über die Verklebungsfestigkeit eines doppelseitig klebenden Klebeprodukts in Richtung der Klebschichtnormalen.

### Probenvorbereitung für den Push-Out-Test

Aus den zu untersuchenden, haftklebrigen reaktiven Klebstofffilmen, die beidseitig jeweils mit einem Trennliner abgedeckt waren, wurden runde Stanzlinge mit einem Durchmesser von 21 mm ausgestanzt. Die Trennliner wurden daraufhin jeweils von einer Seite des Stanzlings abgezogen. Die Stanzlinge wurden passgenau jeweils auf eine runde, 5 mm dicke Probenscheibe aus schwarz eingefärbtem, nicht-transparenten Polycarbonat ("Disc", erstes Substrat, erster Prüfkörper) mit ebenfalls einem Durchmesser von 21 mm aufgelegt. Die Stanzlinge hafteten nun jeweils passgenau an der "Disc". Anschließend wurde das noch auf den Stanzlingen verbliebene Trennpapier abgezogen. Die Discs waren somit nun mit den haftklebrigen, reaktiven Klebstofffilmen ausgerüstet.

### Bestrahlung für den Push-Out-Test

Die Bestrahlungen erfolgten mit dem UVA CUBE 100 von der Firma Hönle, der mit einer Quecksilberdampflampe ausgerüstet war. Die Distanz der reaktiven Klebstofffilme zur Quecksilberdampflampe wurde mit Hilfe eines Laborboys so eingestellt, dass sie wenige Millimeter betrug. Die Bestrahlungszeit betrug jeweils eine Minute. Danach erfolgte das Fügen der Prüfkörper. Die Zeitspanne zwischen dem Ende des Bestrahlens und dem Fügen der Prüfkörper wurde variiert. Sie betrug zwischen einer und fünf Minuten.

### Verklebung für den Push-Out-Test

Das zweite Substrat (zweiter Prüfkörper) war eine 5 mm dicke quadratische Lochplatte, die ebenfalls aus schwarz eingefärbtem, nicht-transparentem Polycarbonat bestand. Die Seitenlängen betrugen jeweils 40 mm. Das Loch war jeweils zentral angeordnet und rund, der Lochdurchmesser betrug 9 mm.

Die mit den bestrahlten Stanzlingen ausgerüsteten runden Probenkörper wurden mit der jeweils offen liegenden Seite der Stanzlinge derart auf der Lochplatte positioniert, dass das Zentrum des runden Probenkörpers und das Zentrum des Lochs der Lochplatte übereinander lagen. Anschließend wurde der durch die Haftklebrigkeit der Stanzlinge zusammengehaltene Verbund aus quadratischer Lochplatte, bestrahltem Stanzling und der Disc so auf einen Tisch gelegt, dass die quadratische Lochplatte unten lag. Auf die Disc wurde ein Gewicht von 2 kg gestellt. Der Verbund wurde dem permanenten Druck des Gewichtes 60 Sekunden (Verpresszeit) jeweils bei 23°C ausgesetzt. Sodann wurde das Gewicht entfernt. Der Verbund wurde anschließend 24 Stunden bei 23°C und 50% relativer Luftfeuchtigkeit gelagert. Dabei kam es zu einer allmählich voranschreitenden Härtungsreaktion innerhalb der Stanzlinge und zu einer sich allmählich verstärkenden Haftung zwischen den Stanzlingen (reaktiven Klebstofffilmen) und den Substraten (Prüfkörpern). Es kam somit zu einer Verklebung mit einer allmählichen Festigkeitszunahme über die Zeit.

Sodann erfolgten die Push-Out-Tests (Frischwerte).

In analoger Weise wurden auch Polyamid- und Aluminium-Verklebungen für Push-Out-Tests hergestellt. Die "Discs" waren dabei in allen Fällen Probenscheiben aus schwarz eingefärbtem, nicht-transparenten Polycarbonat. Die quadratischen Lochplatten waren entweder nicht-transparente Polyamid Prüfkörper und hatten die gleichen Maße wie die Polycarbonat-Lochplatten oder es waren Aluminium-Prüfkörper (Legierung 5005A (AIMG1), eloxiert E6 EV1). Diese waren nur 2 mm dick und hatten ansonsten die gleichen Maße. Alle verwendeten Prüfkörper sind erhältlich bei der Firma Rocholl.

Die Polyamid-Prüfkörper wurden mit dem Piezobrush^{®} PZ2 Handgerät (Fa. relyon plasma GmbH) unmittelbar vor der Verklebung kurz vorbehandelt.

### Durchführung des Push Out-Tests

Es wurde mittels eines in eine Zugprüfmaschine gespannten Dorns durch das Loch in der Lochplatte mit einer konstanten Geschwindigkeit von 10 mm/min senkrecht auf den runden Prüfkörper ("Disc") gedrückt (also parallel zum Normalenvektor auf die Prüfkörper-Ebene; mittig auf die Lochmitte zentriert), bis die Verklebung sich soweit löste, dass ein Druckabfall von 50 % registriert wurde. Der unmittelbar vor dem Druckabfall einwirkende Druck ist der Maximaldruck Pₘₐₓ. Dieser Wert entspricht dem in der Tabelle angegeben Push Out-Wert [N/mm²]. Alle Messungen wurden in einem klimatisierten Raum bei 23 °C und 50 % relativer Luftfeuchte durchgeführt.

### Ergebnisse

### Zugscherfestigkeit und Push-Out (Frischwerte)

### Verklebung von Polycarbonat-Prüfkörpern

| | Zugscherfestigkeit | | | Push-Out Ergebnis | | |
|---|---|---|---|---|---|---|
| | [MPa] | [MPa] | [MPa] | [MPa] | [MPa] | [MPa] |
| | Offenzeit nach Bestrahlung | | | | | |
| | 1 Minute | 3 Minuten | 5 Minuten | 1 Minute | 3 Minuten | 5 Minuten |
| Beispiel 1 | 13,6 (K) | 14,0 (K) | 5,1 (A) | 6,3 (K) | 6,8 (K) | 1,8 (A) |
| Beispiel 2 | 11,2 (K) | 10,7(K) | 3,2 (A) | 5,1 (K) | 5,3 (K) | 1,6 (A) |
| Beispiel 3 | 10,9 (K) | 10,3 (K) | 2,8(A) | 6,6 (K) | 6,3 (K) | 1,8 (A) |
| Beispiel 4 | 11,7 (K) | 12,2 (K) | 3,9 (A) | 5,1 (K) | 5,4 (K) | 2,4 (A) |
| Beispiel 5 | 12,3 (K) | 12,0 (K) | 4,2 (A) | 5,4 (K) | 5,4 (K) | 2,6 (A) |
| Beispiel 6 | 11,7 (K) | 11,2 (K) | 1,7 (A) | 5,8 (K) | 5,3 (K) | 1,1 (A) |
| Beispiel 7 | 10,4 (K) | 10,9 (K) | 1,1 (A) | 4,8 (K) | 5,0 (K) | 0,7 (A) |

| | | | | | | |
|---|---|---|---|---|---|---|
| Bruchbilder: A=Adhäsiv K=Kohäsiv M=Mischbruch | | | | | | |

### Zugscherfestigkeit zur Prüfung der Lagerstabilität

### Verklebung von Polycarbonat-Prüfkörpern

### Offenzeit nach Bestrahlung jeweils 1 Minute

| | Zugscherfestigkeit | |
|---|---|---|
| | Frischwerte | Nach ½ Jahr Lagerung der nicht bestrahlten, haftklebrigen, reaktiven Klebstofffilme bei 23°C |
| | [MPa] | [MPa] |
| Beispiel 1 | 13,6 (K) | 13,1 (K) |
| Beispiel 2 | 11,2 (K) | 11,4 (K) |
| Beispiel 3 | 10,9 (K) | 10,1 (K) |
| Beispiel 4 | 11,7 (K) | 10,2 (K) |
| Beispiel 5 | 12,3 (K) | 11,8 (K) |
| Beispiel 6 | 11,7 (K) | 9,1 (K) |
| Beispiel 7 | 10,4 (K) | 9,8 (K) |

| | | |
|---|---|---|
| Bruchbilder: A=Adhäsiv K=Kohäsiv M=Mischbruch | | |

### Zugscherfestigkeit und Push-Out (Frischwerte)

### Verklebung von Polyamid und Aluminium-Prüfkörpern

### Offenzeit nach Bestrahlung jeweils 1 Minute

| | Polyamid, vorbehandelt mit Piezo-Brush | | Eloxiertes Aluminium | |
|---|---|---|---|---|
| | Zugscherfestigkeit | Push-Out | Zugscherfestigkeit | Push-Out |
| | [MPa] | [MPa] | [MPa] | [MPa] |
| Beispiel 1 | 1,7 (A) | 2,2 (A) | 8,0 (A) | 1,0 (A) |
| Beispiel 2 | 4,9 (A) | 3,7 (M) | 9,2 (A) | 3,3 (A) |
| Beispiel 3 | 4,9 (A) | 2,2 (M) | 5,5 (A) | 1,5 (A) |
| Beispiel 4 | 2,9 (A) | 1,0 (A) | 4,0 (A) | 1,6 (A) |
| Beispiel 5 | 4,1 (A) | 2,6 (A) | 5,9 (A) | 3,6 (M) |
| Beispiel 6 | 3,8 (A) | 2,9 (A) | 4,4 (A) | 3,2 (A) |
| Beispiel 7 | 3,2 (A) | 2,6 (A) | 3,6 (A) | 2,9 (M) |

| | | | | |
|---|---|---|---|---|
| Bruchbilder: A=Adhäsiv K=Kohäsiv M=Mischbruch | | | | |

### Diskussion der Ergebnisse

Der erfindungsgemäße reaktive Klebstoff/ Klebstofffilm kann mit dem Licht einer Quecksilberdampflampe gehärtet werden. Er stellt gegenüber dem Stand der Technik dahingehend eine deutliche Verbesserung dar, dass er einerseits nach erfolgter Bestrahlung nicht sofort durchhärtet, sondern eine Offenzeit von ungefähr 3 Minuten hat und andererseits im Dunkeln weiter härtet, so dass er für die Verklebung nicht transparenter Substrate geeignet ist. Weiterhin werden auf klebefreundlichen Substraten wie beispielsweise Polycarbonat hohe Verklebungsfestigkeiten sowohl im Zugscherfestigkeitstest als auch im Push-Out-Test erzielt. Auf allgemein schwer zu verklebenden Substraten wie beispielsweise Polyamid können Verklebungsfestigkeiten erzielt werden, die für viele Anwendungen akzeptabel sind.

## Patentansprüche

1. Reaktiver Klebstoff, umfassend
(a) mindestens ein reaktives Monomer oder Reaktivharz
und
(b) einen Initiator, insbesondere Radikalinitiator
**dadurch gekennzeichnet, dass**
der Klebstoff weiterhin
(c) ein Übergangsmetallkomplex mit Ruthenium oder Iridium als Zentralatom umfasst,
wobei das reaktive Monomer oder Reaktivharz (a) mindestens einen Vertreter, ausgewählt aus Acrylsäure, Acrylsäureester, Methacrylsäure, Methacrylsäureester, Diacrylate, Dimethacrylate, Triacrylate, Trimethacrylate, höhere funktionelle Acrylate, höhere funktionelle Methacrylate, Vinylverbindungen und/oder oligomere oder polymere Verbindungen mit Kohlenstoff-Kohlenstoff-Doppelbindungen, sowie vernetzenden reaktiven Monomeren wie Diacrylaten, Dimethacrylaten, Triacrylaten, Trimethacrylaten, höher funktionellen Acrylaten, sowie höher funktionellen Methacrylaten, besonders bevorzugt Tetrahydrofurfurylacrylat, Tetrahydrofurfurylmethacrylat, 2-Phenoxyethylacrylat, 2-Phenoxyethylmethacrylat, 3,3,5-Trimethylcyclohexylmethacrylat, 4-(1,1-dimethylethyl)cyclohexylmethacrylat, 4-Acryloylmorpholin, 4-Methacryloylmorpholin, 2-Hydroxy-3-phenoxy-propylacrylat, 2-Hydroxy-3-phenoxy-propylmethacrylat, (5-Ethyl-1,3-dioxan-5-yl)methylacrylat, Bisphenol A glycerolate dimethacrylat (BIS-GMA), Bisphenol A dimethacrylate (BIS-DMA) sowie den vernetzenden reaktiven Monomeren Ethylenglykoldiacrylat, Ethylenglykoldimethacrylat, Trimethyloylpropan-propoxylat-triacrylat, Trimethyloyl-propantriacrylat und/ oder Di(trimethylolpropan)tetraacrylat umfasst,
wobei der Übergangsmetallkomplex
- Ruthenium als Zentralatom und Bipyridin oder einem einfach oder mehrfach substituierten Bipyridin-Derivat als Liganden
oder
- Iridium als Zentralatom und Phenylpyridin oder einem einfach oder mehrfach substituierten Phenylpyridin-Derivat als Liganden
umfasst.

2. Reaktiver Klebstoff nach Anspruch 1, **dadurch gekennzeichnet, dass**
der Übergangsmetallkomplex [Tris(2,2'-bipyridyl)ruthenium(II)]²⁺, Tris[2-(2,4-difluoro-phenyl)pyridin]iridium(III) oder Tris(2-phenylpyridinato)iridium(III) umfasst.

3. Reaktiver Klebstoff nach einem der vorhergehenden Ansprüche, **dadurch gekennzeichnet, dass**
der Radikalinitiator (b) ein Peroxid, vorzugsweise ein Hydroperoxid, besonders bevorzugt α,α-Dimethylbenzylhydroperoxid, oder Diisopropylbenzol-hydroperoxid umfasst.

4. Reaktiver Klebstoff nach einem der vorhergehenden Ansprüche, umfassend
(d) eine polymere Filmbildner-Matrix, bevorzugt ein thermoplastisches Polymer, ein Elastomer und/oder ein thermoplastisches Elastomer als polymere Filmbildner-Matrix, besonders bevorzugt ein thermoplastisches Polyurethan als Filmbildner-Matrix.

5. Reaktiver Klebstoff nach einem der vorhergehenden Ansprüche, bestehend aus oder umfassend
10 bis 90 Gew. % mindestens eines reaktiven Monomers oder Reaktivharzes,
0,1 bis 10 Gew. % Initiator, insbesondere Radikalinitiator,
bis 5 Gew. % Übergangsmetallkomplex,
10 bis 90 Gew. % polymere Filmbildner-Matrix,
bevorzugt
40 bis 70 Gew. % mindestens eines reaktiven Monomers oder Reaktivharzes,
0,2 bis 8 Gew. % Initiator, insbesondere Radikalinitiator,
bis 5 Gew. % Übergangsmetallkomplex,
20 bis 70 Gew. % polymere Filmbildner-Matrix.

6. Reaktiver Klebstoff nach einem der vorhergehenden Ansprüche, **dadurch gekennzeichnet, dass**
er haftklebrig ist.

7. Reaktiver Klebstoff nach einem der vorhergehenden Ansprüche, vorliegend in Filmform.

8. Reaktiver Klebstoff in Filmform nach Anspruch 7, umfassend
weitere Filme, Schichten, Klebstoffe, Träger, Trennpapiere und/oder Trennliner.

9. Verfahren zur Herstellung eines reaktiven Klebstoffs nach einem der Ansprüche 1 bis 6 oder eines reaktiven Klebstofffilms nach einem der Ansprüche 7 oder 8, **dadurch gekennzeichnet, dass**
das Verfahren - unter Ausschluss von UV-Licht oder sichtbarem Licht der Wellenlänge, durch die der jeweilige Übergangsmetallkomplex angeregt wird - die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs oder des zu verklebenden Substrats mit der Mischung aufgelöster oder feinverteilter Inhaltsstoffe nach Schritt 2,
4. Verdunsten des Lösemittels und/oder Wassers,
5. gegebenenfalls Aufwickeln des reaktiven Klebstofffilms zu einer Rolle,
wobei die Inhaltsstoffe
(a) mindestens ein reaktives Monomer oder Reaktivharz,
(b) einen Initiator, insbesondere Radikalinitiator,
(c) einen Übergangsmetallkomplex mit Ruthenium oder Iridium als Zentralatom, optional (d) eine polymere Filmbildner-Matrix
sowie gegebenenfalls weitere Additive und/oder Hilfsstoffe umfassen.

10. Verwendung eines reaktiven Klebstoffs nach einem der Ansprüche 1 bis 6 oder Klebstofffilms nach einem der Ansprüche 7 oder 8 zur Verklebung von Materialien aus Metall, Holz, Glas, Keramik und/oder Kunststoffen.

11. Verbundkörper umfassend zumindest zwei Verklebungsflächen, die durch den reaktiven Klebstoff nach einem der Ansprüche 1 bis 6 oder Klebstofffilm nach einem der Ansprüche 7 oder 8 miteinander verbunden sind.

## Claims

1. A reactive adhesive comprising
(a) at least one reactive monomer or reactive resin, and
(b) an initiator, in particular a radical initiator, **characterized in that**
the adhesive further comprises
(c) a transition metal complex with ruthenium or iridium as the central atom,
wherein the reactive monomer or reactive resin (a) comprises at least one agent selected from acrylic acid, acrylic acid esters, methacrylic acid, methacrylic acid esters, diacrylates, dimethacrylates, triacrylates, trimethacrylates, higher functional acrylates, higher functional methacrylates, vinyl compounds and/or oligomeric or polymeric compounds with carbon-carbon double bonds, as well as crosslinking reactive monomers such as diacrylates, dimethacrylates, triacrylates, trimethacrylates, higher functional acrylates, as well as higher functional methacrylates, particularly preferably tetrahydrofurfuryl acrylate, tetrahydrofurfuryl methacrylate, 2-phenoxyethyl acrylate, 2-phenoxyethyl methacrylate, 3,3,5-trimethylcyclohexyl methacrylate, 4-(1,1-dimethylethyl)cyclohexyl methacrylate, 4-acryloylmorpholine, 4-methacryloylmorpholine, 2-hydroxy-3-phenoxypropyl acrylate, 2-hydroxy-3-phenoxypropyl methacrylate, (5-ethyl-1,3-dioxan-5-yl)methyl acrylate, bisphenol A glycerolate dimethacrylate (BIS-GMA), bisphenol A dimethacrylate (BIS-DMA) as well as the crosslinking reactive monomers ethylene glycol diacrylate, ethylene glycol dimethacrylate, trimethyloylpropane propoxylate triacrylate, trimethyloylpropane triacrylate and/or di(trimethylolpropane)tetraacrylate,
wherein the transition metal complex comprises
- ruthenium as the central atom and bipyridine or a monosubstituted or polysubstituted bipyridine derivative as ligands,
or
- iridium as the central atom and phenylpyridine or a monosubstituted or polysubstituted phenylpyridine derivative as ligands.

2. The reactive adhesive as claimed in claim 1, **characterized in that** the transition metal complex comprises [tris(2,2'-bipyridyl)ruthenium(II)]²⁺, tris[2-(2,4-difluorophenyl)pyridine]iridium(III) or tris(2-phenylpyridinato)iridium(III).

3. The reactive adhesive as claimed in one of the preceding claims, **characterized in that**
the radical initiator (b) comprises a peroxide, preferably a hydroperoxide, particularly preferably α,α-dimethylbenzyl hydroperoxide, or diisopropylbenzene hydroperoxide.

4. The reactive adhesive as claimed in one of the preceding claims, comprising
(d) a polymeric film-former matrix, preferably a thermoplastic polymer, an elastomer and/or a thermoplastic elastomer as the polymeric film-former matrix, particularly preferably a thermoplastic polyurethane as the film-former matrix.

5. The reactive adhesive as claimed in one of the preceding claims, consisting of or comprising
10 to 90 % by weight of at least one reactive monomer or reactive resin,
0.1 to 10 % by weight of initiator, in particular radical initiator,
up to 5 % by weight of transition metal complex,
10 to 90 % by weight of polymeric film-former matrix, preferably
40 to 70 % by weight of at least one reactive monomer or reactive resin,
0.2 to 8 % by weight of initiator, in particular radical initiator,
up to 5 % by weight of transition metal complex,
20 to 70 % by weight of polymeric film-former matrix.

6. The reactive adhesive as claimed in one of the preceding claims, **characterized in that**
it is pressure-sensitive.

7. The reactive adhesive as claimed in one of the preceding claims, in film form.

8. The reactive adhesive in film form as claimed in claim 7, comprising further films, layers, adhesives, carriers, release papers and/or release liners.

9. A method for the production of a reactive adhesive as claimed in one of claims 1 to 6 or of a reactive adhesive film as claimed in one of claims 7 or 8, **characterized in that**
the method - under the exclusion of UV light or visible light with a wavelength by which the respective transition metal complex is excited - comprises the following steps:
1. dissolving and/or finely dispersing the constituents in one or more solvent(s) and/or water,
2. mixing the dissolved or finely dispersed constituents,
3. coating a release liner or release paper, a carrier material or a pressure-sensitive adhesive or the substrate to be bonded with the mixture of constituents which have been dissolved or finely dispersed in accordance with step 2,
4. evaporating off the solvent and/or water,
5. optionally, winding the reactive adhesive film up into a roll,
wherein the constituents comprise
(a) at least one reactive monomer or reactive resin,
(b) an initiator, in particular a radical initiator,
(c) a transition metal complex with a ruthenium or iridium as the central atom,
optionally, (d) a polymeric film-former matrix
as well as optional further additives and/or auxiliary materials.

10. Use of a reactive adhesive or adhesive film as claimed in one of claims 1 to 6 or adhesive film as claimed in one of claims 7 or 8 for bonding materials produced from metal, wood, glass, ceramic and/or plastics.

11. A composite body comprising at least two bonding surfaces which are connected together by the reactive adhesive as claimed in one of claims 1 to 6 or the adhesive film as claimed in one of claims 7 or 8.

## Revendications

1. Adhésif réactif, comprenant
(a) au moins un monomère réactif ou une résiné réactive et
(b) un initiateur, notamment un initiateur radicalaire **caractérisé en ce que**
ledit adhésif comprend en outre
(c) un complexe de métal de transition dont l'atome central est du ruthénium ou de l'iridium,
le monomère réactif ou la résiné réactive (a) comprenant au moins un constituant choisi parmi l'acide acrylique, un ester d'acide acrylique, l'acide méthacrylique, un ester d'acide méthacrylique, les diacrylates, les diméthacrylates, les triacrylates, les triméthacrylates, les acrylates à groupe fonctionnel dotés d'une masse moléculaire plus importante, les méthacrylates à groupe fonctionnel dotés d'une masse moléculaire plus importante, les composés vinyliques et/ou les composés oligomères ou polymères pourvus de liaisons doubles carbone-carbone, ainsi que les monomères réactifs réticulants tels que les diacrylates, les diméthacrylates, les triacrylates, les triméthacrylates, les acrylates à groupe fonctionnel dotés d'une masse moléculaire plus importante, les méthacrylates à groupe fonctionnel dotés d'une masse moléculaire plus importante, s'agissant avec une préférence particulière d'acrylate de tétrahydrofurfuryle, méthacrylate de tétrahydrofurfuryle, acrylate de 2-phénoxyéthyle, méthacrylate de 2-phénoxyéthyle, méthacrylate de 3,3,5-triméthylcyclohexyle, méthacrylate de 4-(1,1-(diméthyléthyl)cyclohexyle, morpholine de 4-acryloyle, morpholine de 4-méthacryloyle, acrylate de 2-hydroxy-3-phénoxypropyle, méthacrylate de 2-hydroxy-3-phénoxypropyle, méthacrylate de (5-éthyl-1,3-dioxane-5-yle), diméthacrylate de glycérolate de bisphénol (BIS-GMA), diméthacrylate de bisphénol A (BIS-DMA) ainsi que parmi les monomères réactifs réticulants diacrylate d'éthylène-glycol, triacrylate de propoxylate de trimethyloylpropane, triacrylate de triméthyloylpropane et/ou tétraacrylate de di-(triméthylolpropane),
ledit complexe de métal de transition comprenant
- du ruthénium en tant qu'atome central et de la bipyridine ou un dérivé de bipyridine mono- ou polysubstitué en tant que ligand
ou
- de l'iridium en tant qu'atome central et de la phénylpyridine ou un dérivé de phénylpyridine mono- ou polysubstitué en tant que ligand.

2. Adhésif réactif selon la revendication 1, **caractérisé en ce que** le complexe de métal de transition comprend du [tris (2,2'-bipyridyl)ruthénium(II)]²⁺, tris-[2-(2,4-difluorophényl)pyridine]iridium(III) ou du tris-(2-phénylpyridinato)iridium(III).

3. Adhésif réactif selon l'une des revendications précédentes, **caractérisé en ce que**
l'initiateur radicalaire (b) comprend un peroxyde, notamment un hydroperoxyde, s'agissant avec une préférence particulière de *α,α-*diméthylbenzylhydroperoxyde ou de diisopropylbenzène-hydroperoxyde.

4. Adhésif réactif selon l'une des revendications précédentes, comprenant
(d) une matrice de filmogène polymère, s'agissant notamment d'un polymère thermoplastique, d'un élastomère et/ou d'un élastomère thermoplastique en tant que matrice de filmogène polymère, avec une préférence particulière d'un polyuréthane thermoplastique en tant que matrice de filmogène.

5. Adhésif réactif selon l'une des revendications précédentes, constitué de ou comprenant
10 à 90 % en poids d'au moins un monomère réactif ou une résiné réactive
0,1 à 10 % en poids d'un initiateur, notamment d'un initiateur radicalaire,
jusqu'à 5 % en poids d'un complexe de métal de transition
10 à 90 % en poids d'une matrice de filmogène polymère, de préférence
40 à 70 % en poids d'au moins un monomère réactif ou une résiné réactive,
0,2 à 8 % en poids d'un initiateur, notamment d'un initiateur radicalaire,
jusqu'à 5 % en poids d'un complexe de métal de transition,
20 à 70 % en poids d'une matrice de filmogène polymère.

6. Adhésif réactif selon l'une des revendications précédentes, **caractérisé en ce qu'**il
s'agit d'un adhésif sensible à la pression.

7. Adhésif réactif selon l'une des revendications précédentes qui se présente sous forme d'un film.

8. Adhésif réactif sous forme d'un film selon la revendication 7, comprenant
d'autres films, couches, adhésifs, supports, papiers de séparation et/ou protecteurs de séparation.

9. Procédé de préparation d'un adhésif réactif selon l'une des revendications 1 à 6 ou d'un film d'adhésif réactif selon l'une des revendications 7 ou 8, **caractérisé en ce que**
ledit procédé comprend - à l'abri de lumière UV ou lumière visible ayant la longueur d'onde d'excitation dudit complexe de métal de transition - les étapes suivantes :
1. dissoudre et/ou disperser finement des ingrédients dans un ou plusieurs solvant(s) et/ou de l'eau,
2. mélanger les ingrédients dissous ou finement dispersés,
3. revêtir un protecteur un papier de protection, un matériau de support ou un adhésif sensible à la protection ou le substrat à coller, avec le mélange d'ingrédients dissous ou finement dispersés selon l'étape 2,
4. faire évaporer le solvant et/ou l'eau,
5. le cas échéant, enrouler le film d'adhésif réactif pour former un rouleau,
les ingrédients comprenant
(a) au moins un monomère réactif ou une résiné réactive,
(b) un initiateur, notamment un initiateur radicalaire,
(c) un complexe de métal de transition un dont l'atome central est du ruthénium ou de l'iridium,
optionnellement, (d) une matrice de filmogène polymère, ainsi que, le cas échéant, d'autres additifs et/ou agents auxiliaires.

10. Utilisation d'un adhésif réactif selon l'une des revendications 1 à 6 ou d'un film d'adhésif selon l'une des revendications 7 ou 8 pour coller des matériaux en métal, bois, verre, céramique et/ou matières plastiques.

11. Corps composite, comprenant au moins deux faces collées l'une sur l'autre dont la liaison a été réalisée par l'adhésif réactif selon l'une des revendications 1 à 6 ou le film d'adhésif selon l'une des revendications 7 ou 8.
